# EUROPÄISCHE PATENTSCHRIFT

(11) **EP 2 202 276 B1**
(45) Veröffentlichungstag und Bekanntmachung des Hinweises auf die Patenterteilung: **28.11.2018**
(21) Anmeldenummer: 08172783.6
(22) Anmeldetag: 23.12.2008
(51) Int. Cl.: C08L 83/06, C09D 183/06, C09J 183/06

(54) **Siliconzusammensetzung mit beschleunigter Vernetzung**
Silicon compound with accelerated integration
Composition de silicone ayant une mise en réseau accélérée

(43) Veröffentlichungstag der Anmeldung: 30.06.2010
(73) Patentinhaber: Sika Technology AG, 6340 Baar (CH)
(72) Erfinder: Djurdjevic, Alexander, 8048, Zürich (CH); Hamann, Christin, 8967, Widen (CH); Böttiger, Michael, 5454, Bellikon (CH); Müller, Andrea, 5600, Ammerwil (CH); Bankwitz, Uwe, 8162, Steinmaur (CH)
(74) Vertreter: Sika Patent Attorneys

(56) Entgegenhaltungen:
- EP-A- 1 698 668
- DE-T2- 60 102 746
- DE-T2- 60 102 746
- JP-A- 2008 163 143
- JP-A- 2008 163 143
- US-A1- 2006 258 818
- PARBHOO B ET AL: "Fundamental aspects of adhesion technology in silicones", 1 January 2002 (2002-01-01), ADHESION SCIENCE AND ENGINEERING, ELSEVIER B.V, NETHERLANDS, PAGE(S) 677 - 709, XP008136182, ISBN: 978-0-444-51140-9 [retrieved on 2007-08-01] * page 682 - page 684 *
- "Silicones", 15 April 2003 (2003-04-15), ENCYCLOPEDIA OF POLYMER SCIENCE AND TECHNOLOGY, WILEY, US, PAGE(S) 765 - 841, XP007918236, * page 810 - page 811 *

## Beschreibung

### Technisches Gebiet

Die vorliegende Erfindung betrifft das Gebiet der Siliconzusammensetzungen.

### Stand der Technik

Siliconzusammensetzungen sind schon seit längerem bekannt und werden insbesondere als Kleb- und Dichtstoffe in unterschiedlichen Anwendungen eingesetzt. Weit verbreitet sind dabei sowohl einkomponentige, feuchtigkeitshärtende Siliconzusammensetzungen, auch bekannt als RTV-1 Silicone (RTV-1: "room temperature vulcanizing, 1-part silicones"), als auch bei Raumtemperatur vernetzende, zweikomponentige Siliconzusammensetzungen, auch bekannt als RTV-2 Silicone (RTV-2: "room temperature vulcanizing, 2-part silicones").

Ein bedeutender Vorteil der einkomponentigen, feuchtigkeitshärtenden Siliconzusammensetzungen ist, dass sich ihre Applikation sehr einfach gestaltet, da der Applikation kein Schritt des Mischens mehrerer Komponenten vorangeht. Hingegen weisen RTV-1 Zusammensetzungen den Nachteil auf, dass ihre Aushärtung von äusseren Faktoren, vor allem von der Luftfeuchtigkeit, abhängig ist.

Dem gegenüber steht der Vorteil von zweikomponentigen Siliconzusammensetzungen, dass deren Aushärtung grösstenteils unabhängig von äusseren Faktoren, insbesondere auch unabhängig von der Luftfeuchtigkeit, abläuft. Jedoch weisen RTV-2 Zusammensetzungen den Nachteil auf, dass vor oder bei der Applikation der Zusammensetzung das Mischen der beiden Komponenten zu erfolgen hat und sie dadurch anfällig auf Mischfehler sind. Bereits bei geringen Abweichungen vom vorgegebenen Mischungsverhältnis der Komponenten **A** und **B** zueinander kann die Gefahr bestehen, mangelhafte Resultate zu erhalten.

JP 2008 163143 A offenbart eine Zusammensetzung mit einer Komponente A umfassend ein OH-terminiertes Polydimethylsiloxan, beschichtetes Calciumcarbonat, Ketoximosilan als Vernetzer, Aminosilan und Dibutylzinndilaurat als Katalysator und einer Komponente B umfassend ein OH-terminiertes Polydimethylsiloxan, beschichtetes Calciumcarbonat und nasse Kieselsäure.

DE 601 02 746 T2 offenbart eine Zusammensetzung mit einer Komponente A umfassend ein OH-terminiertes Polydimethylsiloxan, Füllstoff, einen Ketoximvernetzer, ein Zinn-Katalysator sowie ein Aminosilan und einer Komponente B umfassend ein OH-terminiertes Polydimethylsiloxan und eine Wasser enthaltende Nassprozess-Kieselsäure.

EP 1 698 668 A offenbart eine RTV1 Zusammensetzung umfassend ein OH-terminiertes Polydiorganositoxan, einen Vemetzer sowie nasse Kieselsäure mit einem Wassergehalt von bis zu 4%.

US 2006/258818 A1 offenbart Organopolysiloxanzusammensetzungen umfassend ein OH- oder Alkoxy-terminiertes Polydimethylsiloxan, Polyoxypropylen-modifiziertes Silicon, nasse Kieselsäure, sowie ein Silan oder Siloxan mit mindestens drei hydrolysierbaren Gruppen.

### Darstellung der Erfindung

Aufgabe der vorliegenden Erfindung ist es daher, eine Siliconzusammensetzung bereitzustellen, welche schnell und unabhängig von äusseren Faktoren aushärtbar und gleichzeitig nicht anfällig auf Mischfehler der beiden Komponenten ist.

Überraschenderweise wurde gefunden, dass zweikomponentige Siliconzusammensetzungen gemäss Anspruch 1 diese Aufgabe lösen.

Durch den Einsatz einer zweikomponentigen Siliconzusammensetzung bestehend aus einer ersten Komponente **A,** welche eine einkomponentige, feuchtigkeitshärtende Siliconzusammensetzung umfasst, und einer zweiten Komponente **B** umfassend unter anderem Wasser, kann eine Siliconzusammensetzung zur Verfügung gestellt werden, welche durch Mischen der beiden Komponenten sehr schnell aushärtet und nötigenfalls mittels Luftfeuchtigkeit nachhärten kann, wodurch mehr Spielraum beim Mischungsverhältnis der beiden Komponenten geboten wird und allfällige Mischfehler kompensiert werden.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft eine zweikomponentige Siliconzusammensetzung bestehend aus einer Komponente A umfassend
i) eine einkomponentige, feuchtigkeitshärtende Siliconzusammensetzung, wobei
   die einkomponentige, feuchtigkeitshärtende Siliconzusammensetzung mindestens ein Polydiorganosiloxan **P2** der Formel (II) umfasst, 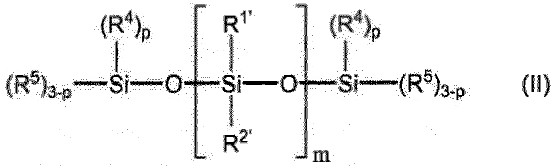 wobei
   die Reste R^{1'}, R^{2'} und R⁴ unabhängig voneinander für lineare oder verzweigte, einwertige Kohlenwasserstoffreste mit 1 bis 12 C-Atomen stehen, welche gegebenenfalls ein oder mehrere Heteroatome, und gegebenenfalls eine oder mehrere C-C-Mehrfachbindungen und/oder gegebenenfalls cycloaliphatische und/oder aromatische Anteile aufweisen;
   die Reste R⁵ unabhängig voneinander für Ketoximgruppen mit jeweils 1 bis 13 C-Atomen stehen;
   der Index p für einen Wert von 0 steht;
   der Index m so gewählt ist, dass das Polydiorganosiloxan **P2** bei einer Temperatur von 23 °C eine Viskosität von 10 bis 500'000 mPa·s aufweist; und
   die einkomponentige, feuchtigkeitshärtende Siliconzusammensetzung mindestens einen Vernetzer für Polydiorganosiloxane enthält;
   und einer Komponente **B** umfassend
      i') Wasser; sowie
      ii') mindestens ein Trägermaterial, ausgewählt aus der Gruppe bestehend aus einem Polydiorganosiloxan, einem Weichmacher, einem Verdickungsmittel und einem Füllstoff;
   dadurch gekennzeichnet, dass der Wasseranteil an der gesamten zweikomponentigen Siliconzusammensetzung in dem Bereich liegt, dass mit dem vorhandenen Wasser 50 bis 100 % aller reaktiven Gruppen in der Zusammensetzung umgesetzt werden können, und der Vernetzer für Polydiorganosiloxane ein Silan der Formel (III) ist 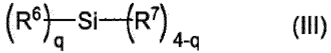 wobei
      der Rest R⁶ unabhängig voneinander für einen linearen oder verzweigten, einwertigen Kohlenwasserstoffrest mit 1 bis 12 C-Atomen steht, welcher gegebenenfalls ein oder mehrere Heteroatome, und gegebenenfalls eine oder mehrere C-C-Mehrfachbindungen und/oder gegebenenfalls cycloaliphatische und/oder aromatische Anteile aufweist;
      der Rest R⁷ unabhängig voneinander für eine Hydroxylgruppe oder für eine Alkoxy-, Acetoxy- oder Ketoximgruppe mit jeweils 1 bis 13 C-Atomen steht, welche gegebenenfalls ein oder mehrere Heteroatome, und gegebenenfalls eine oder mehrere C-C-Mehrfachbindungen und/oder gegebenenfalls cycloaliphatische und/oder aromatische Anteile aufweist; und
      der Index q für einen Wert von 0 bis 4 steht, mit der Massgabe, dass falls q für einen Wert von 3 oder 4 steht, mindestens q-2 Reste R⁶ jeweils mindestens eine mit den Hydroxylgruppen des Polydiorganosiloxans **P2** reaktive Gruppe aufweisen,

Mit "Poly" beginnende Substanznamen wie beispielsweise Polyol bezeichnen im vorliegenden Dokument Substanzen, die formal zwei oder mehr der in ihrem Namen vorkommenden funktionellen Gruppen pro Molekül enthalten.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.

Unter dem Begriff "Topfzeit" wird die Verarbeitbarkeitsdauer von reaktiven Zusammensetzungen nach deren Applikation verstanden. Das Ende der Topfzeit ist in den meisten Fällen mit einem derartigen Viskositätsanstieg der Zusammensetzung verbunden, so dass keine zweckmässige Verarbeitung der Zusammensetzung mehr möglich ist.

In diesem Dokument ist die Verwendung des Terms "unabhängig voneinander" in Zusammenhang mit Substituenten, Resten oder Gruppen dahingehend auszulegen, dass in demselben Molekül die gleich bezeichneten Substituenten, Reste oder Gruppen gleichzeitig mit unterschiedlicher Bedeutung auftreten können.

Die Komponente A der zweikomponentigen Siliconzusammensetzung umfasst eine einkomponentige, feuchtigkeitshärtende Siliconzusammensetzung, wie sie für sich alleine als einkomponenteiger Klebstoff, Dichtstoff, Beschichtung oder Gussmasse eingesetzt werden kann, welcher feuchtigkeitshärtend ist und insbesondere mittels Luftfeuchtigkeit aushärtet (RTV-1 Silicon).

Die einkomponentigen, feuchtigkeitshärtenden Siliconzusammensetzungen weisen mindestens ein Polydiorganosiloxan **P2** der Formel (II) auf.

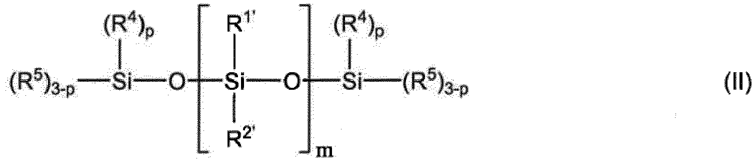

Dabei stehen die Reste R^{1'}, R^{2'} und R⁴ unabhängig voneinander für lineare oder verzweigte, einwertige Kohlenwasserstoffreste mit 1 bis 12 C-Atomen, welche gegebenenfalls ein oder mehrere Heteroatome, und gegebenenfalls eine oder mehrere C-C-Mehrfachbindungen und/oder gegebenenfalls cycloaliphatische und/oder aromatische Anteile aufweisen. Insbesondere stehen die Reste R^{1'} und R^{2'} für Alkylreste mit 1 bis 5, insbesondere mit 1 bis 3, C-Atomen, bevorzugt für Methylgruppen. Die Reste R⁴ stehen insbesondere für Phenyl-, Vinyl oder für Methylgruppen.

Die Reste R⁵ stehen unabhängig voneinander Ketoximgruppen mit jeweils 1 bis 13 C-Atomen.

Weiterhin steht der Index p für einen Wert von 0, und der Index m ist so gewählt, dass das Polydiorganosiloxan **P2** bei einer Temperatur von 23 °C eine Viskosität von 10 bis 500'000 mPa·s, insbesondere von 6'000 bis 100'000 mPa·s, aufweist.

Bevorzugte Ketoximgruppen sind Dialkylketoximgruppen deren Alkylgruppen jeweils 1 bis 6 C-Atome aufweisen. Vorzugsweise stehen die beiden Alkylgruppen der Dialkylketoximgruppen unabhängig von einander für Methyl-, Ethyl-, n-Propyl-, iso-Propyl-, n-Butyl- oder iso-Butylgruppen. Besonders bevorzugt sind diejenigen Fälle, in denen eine Alkylgruppe des Dialkylketoxims für eine Methylgruppe steht und die andere Alkylgruppe des Dialkylketoxims für eine Methyl-, Ethyl- oder für eine iso-Butylgruppe steht. Meist bevorzugt steht die Ketoximgruppe für eine Ethyl-methylketoximgruppe.

Vorzugsweise umfasst die einkomponentige, feuchtigkeitshärtende Siliconzusammensetzung, wie sie in der Komponente **A** der erfindungsgemässen zweikomponentigen Siliconzusammensetzung enthalten ist, zusätzlich mindestens einen Vernetzer für Polydiorganosiloxane. Insbesondere ist der Vernetzer für Polydiorganosiloxane ein Silan der Formel (III).

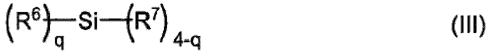

Dabei steht der Rest R⁶ unabhängig voneinander für einen linearen oder verzweigten, einwertigen Kohlenwasserstoffrest mit 1 bis 12 C-Atomen, welcher gegebenenfalls ein oder mehrere Heteroatome, und gegebenenfalls eine oder mehrere C-C-Mehrfachbindungen und/oder gegebenenfalls cycloaliphatische und/oder aromatische Anteile aufweist.

Der Rest R⁷ steht unabhängig voneinander für eine Hydroxylgruppe oder für eine Alkoxy-, Acetoxy- oder Ketoximgruppe mit jeweils 1 bis 13 C-Atomen, welche gegebenenfalls ein oder mehrere Heteroatome, und gegebenenfalls eine oder mehrere C-C-Mehrfachbindungen und/oder gegebenenfalls cycloaliphatische und/oder aromatische Anteile aufweist. Bevorzugte Ketoximgruppen sind bereits vorhergehend beschrieben worden.

Weiterhin steht der Index q für einen Wert von 0 bis 4, mit der Massgabe, dass falls q für einen Wert von 3 oder 4 steht, mindestens q-2 Reste R⁶ jeweils mindestens eine mit den Hydroxyl-, Alkoxy-, Acetoxy- oder Ketoximgruppen des Polydiorganosiloxans **P2,** reaktive Gruppe aufweisen. Insbesondere steht q für einen Wert von 0, 1 oder 2, bevorzugt für einen Wert von 0 oder 1.

Für die Wahl des Silans der Formel (III) als Vernetzer für Polydiorganosiloxane können unterschiedliche Anforderungen an die zweikomponentige Siliconzusammensetzung ausschlaggebend sein. Einerseits spielt die Reaktivität des Silans eine wichtige Rolle, wobei grundsätzlich höherreaktive Silane bevorzugt werden. Aus diesem Grund ist beispielsweise eine Vinylgruppe gegenüber einer Methylgruppe oder eine Methylgruppe gegenüber einer Ethylgruppe als Rest R⁶ bevorzugt. Andererseits können auch toxikologische Gründe für die Wahl des Vernetzers ausschlaggebend sein. Beispielsweise ist deshalb Tetraethoxysilan als Vernetzer gegenüber Tetramethoxysilan bevorzugt.

Beispiele geeigneter Silane der Formel (III) sind Methyltrimethoxysilan, Chlormethyltrimethoxysilan, Ethyltrimethoxysilan, Propyltrimethoxysilan, Vinyltrimethoxysilan, Methyltriethoxysilan, Vinyltriethoxysilan, Phenyltriethoxysilan, Methyltripropoxysilan, Phenyltripropoxysilan, Tetramethoxysilan, Tetraethoxysilan, Tetra-n-propoxysilan, Tetra-n-butoxysilan, Methyltris(methyl-ethyl-ketoximo)silan, Phenyltris(methyl-ethylketoximo)silan, Vinyltris(methyl-ethylketoximo)silan, Methyltris(isobutylketoximo)silan oder Tetra(methyl-ethylketoximo)silan. Besonders bevorzugt sind Methyltrimethoxysilan, Vinyltrimethoxysilan, Tetraethoxysilan, Methyltris(methyl-ethylketoximo)silan, Vinyltris(methylethylketoximo)silan und Methyltris(isobutylketoximo)silan. Bevorzugte Ketoximosilane sind vielfach kommerziell erhältlich, zum Beispiel von ABCR GmbH & Co, Deutschland, oder von Nitrochemie AG, Deutschland.

Weiterhin können die Silane auch bereits teilweise (ein Teil aller R⁷ = OH) oder vollständig hydrolysiert (alle R⁷ = OH) vorliegen. Aufgrund der stark erhöhten Reaktivität von teilweise oder vollständig hydrolysierten Silanen kann ihr Einsatz als Vernetzer vorteilhaft sein. Dem Fachmann ist dabei bekannt, dass es beim Einsatz von teilweise oder vollständig hydrolysierten Silanen zur Bildung von oligomeren Siloxanen, insbesondere zu Dimeren und/oder Trimeren kommen kann, welche durch Kondensation von hydrolysierten Silanen gebildet werden. Demnach können als Vernetzer für die zweikomponentige Siliconzusammensetzung auch oligomere Siloxane eingesetzt werden.

Beispielsweise sind geeignete oligomere Siloxane Hexamethoxydisiloxan, Hexaethoxydisiloxan, Hexa-n-propoxydisiloxan, Hexa-n-butoxydisiloxan, Octaethoxytrisiloxan, Octa-n-butoxytrisiloxan und Decaethoxytetrasiloxan.

Selbstverständlich können als Vernetzer für Polydiorganosiloxane auch beliebige Mischungen der vorhergehend genannten Silane eingesetzt werden.

Der Anteil des Vernetzers für Polydiorganosiloxane beträgt vorzugsweise 0.1 bis 15 Gew.-%, insbesondere 1 bis 10 Gew.-%, bevorzugt 2 bis 6 Gew.-%, der gesamten einkomponentigen, feuchtigkeitshärtenden Siliconzusammensetzung.

Je nach Ausführungsform der Zusammensetzung hat sich gezeigt, dass ein deutlicher Überschuss an Vernetzer in der einkomponentigen, feuchtigkeitshärtenden Siliconzusammensetzung zu einer besseren Durchhärtung der zweikomponentigen Siliconzusammensetzung führt. Einer der Gründe dafür ist, dass das Wasser, welches in der Komponente B enthalten ist, auch direkt mit dem Vernetzer reagieren kann und somit die Vernetzer untereinander weiterreagieren können. Somit kann ein Teil des Vernetzers verbraucht werden, ohne an der eigentlichen Vernetzungsreaktion teilgenommen zu haben.

Weiterhin umfasst die einkomponentige, feuchtigkeitshärtende Siliconzusammensetzung, wie sie in der Komponente **A** der erfindungsgemässen zweikomponentigen Siliconzusammensetzung enthalten ist, insbesondere mindestens einen Katalysator **K** für die Vernetzung von Polydiorganosiloxanen. Insbesondere handelt es sich beim Katalysator **K** um eine zinnorganische Verbindung oder um ein Titanat.

Bevorzugte zinnorganische Verbindungen sind Dialkylzinnverbindungen wie sie beispielsweise ausgewählt sind aus der Gruppe bestehend aus Dimethylzinndi-2-ethylhexanoat, Dimethylzinndilaurat, Di-n-butylzinndiacetat, Di-n-butylzinndi-2-ethylhexanoat, Di-n-butylzinndicaprylat, Di-n-butylzinndi-2,2-dimethyloctanoat, Di-n-butylzinndilaurat, Di-n-butylzinn-distearat, Di-n-butylzinndimaleinat, Di-n-butylzinndioleat, Di-n-octylzinndi-2-ethylhexanoat, Di-n-octylzinndi-2,2-dimethyloctanoat, Di-n-octylzinndimaleinat, Di-n-octylzinndilaurat, Di-n-butylzinnoxid und Di-n-octylzinnoxid.

Als Titanate bzw. Organotitanate werden Verbindungen bezeichnet, welche mindestens einen über ein Sauerstoffatom an das Titanatom gebundenen Liganden aufweisen. Als über eine Sauerstoff-Titan-Bindung an das Titanatom gebundene Liganden eignen sich dabei diejenigen, welche ausgewählt sind aus der Gruppe bestehend aus Alkoxygruppe, Sulfonatgruppe, Carboxylatgruppe, Dialkylphosphatgruppe, Dialkylpyrophosphatgruppe und Acetylacetonatgruppe. Bevorzugte Titanate sind beispielsweise Tetrabutyl- oder Tetraisopropyltitanat.

Weiterhin geeignete Titanate weisen mindestens einen mehrzähnigen Liganden, auch Chelatligand genannt, auf. Insbesondere ist der mehrzähnige Ligand ein zweizähniger Ligand.

Geeignete Titanate sind beispielsweise unter den Handelsnamen Tyzor® AA, GBA, GBO, AA-75, AA-65, AA-105, DC, BEAT, IBAY kommerziell erhältlich von der Firma DuPont, USA.

Selbstverständlich ist es möglich oder in gewissen Fällen sogar bevorzugt, Mischungen verschiedener Katalysatoren einzusetzen.

Der Anteil des Katalysators **K** für die Vernetzung von Polydiorganosiloxanen beträgt vorzugsweise 0.001 bis 10 Gew.-%, insbesondere 0.005 bis 4 Gew.-%, bevorzugt 0.01 bis 3 Gew.-%, der gesamten einkomponentigen, feuchtigkeitshärtenden Siliconzusammensetzung.

Die einkomponentige, feuchtigkeitshärtende Siliconzusammensetzung kann gegebenenfalls noch weitere Bestandteile enthalten.

Derartige zusätzliche Bestandteile sind insbesondere Weichmacher, anorganische und/oder organische Füllstoffe, Härtungsbeschleuniger, Pigmente, Haftvermittler, Verarbeitungshilfsmittel, Rheologiemodifikatoren, Stabilisatoren, Farbstoffe, Inhibitoren, Hitzestabilisatoren, Antistatika, Flammschutzmittel, Biozide, Wachse, Verlaufsmittel, Thixotropierungsmittel und weitere dem Fachmann bekannte gängige Rohstoffe und Additive.

Beim Einsatz von derartigen optionalen Bestandteilen ist es vorteilhaft darauf zu achten, dass diese Bestandteile so ausgewählt sind, dass sie die Lagerstabilität der Zusammensetzung, beispielsweise durch Reaktion untereinander oder mit anderen Inhaltsstoffen, nicht beeinträchtigen, das heisst, dass sich die Zusammensetzung in ihren Eigenschaften, insbesondere den Applikations- und Aushärtungseigenschaften, bei der Lagerung nicht oder nur unwesentlich verändert. Dies bedingt, dass zur chemischen Aushärtung der beschriebenen einkomponentigen, feuchtigkeitshärtenden Siliconzusammensetzung führende Reaktionen während der Lagerung nicht in signifikantem Ausmass auftreten. Es ist deshalb insbesondere von Vorteil, dass die genannten Bestandteile kein oder höchstens Spuren von Wasser enthalten oder beim Lagern freisetzen. Deshalb kann es sinnvoll sein, gewisse Bestandteile vor dem Einmischen in die Zusammensetzung chemisch oder physikalisch zu trocknen.

Als Weichmacher sind besonders trialkylsilylterminierte Polydialkylsiloxane geeignet, insbesondere trimethylsilylterminierte Polydimethylsiloxane. Bevorzugt werden trimethylsilylterminierte Polydimethylsiloxane mit Viskositäten zwischen 1 und 10'000 mPa·s. Besonders bevorzugt sind Viskositäten zwischen 10 und 1'000 mPa·s. Es können jedoch auch trimethylsilylterminierte Polydimethylsiloxane eingesetzt werden, bei denen einige der Methylgruppen durch andere organische Gruppen wie zum Beispiel Phenyl-, Vinyl- oder Trifluorpropylgruppen ersetzt sind. Obwohl besonders bevorzugt lineare trimethylsilylterminierte Polydimethylsiloxane als Weichmacher eingesetzt werden, können auch solche Verbindungen verwendet werden, die verzweigt sind. Derartige verzweigte Verbindungen entstehen dadurch, dass in den zu ihrer Herstellung dienenden Ausgangsstoffen kleine Mengen tri- oder tetrafunktioneller Silane verwendet werden. Weiterhin eignen sich als Weichmacher auch reaktive Weichmacher, insbesondere in der Form von monofunktionellen, d.h. einseitig reaktiven, Polysiloxanen.

Es ist auch möglich anstatt der Polysiloxan-Weichmacher, andere organische Verbindungen, wie zum Beispiel bestimmte Kohlenwasserstoffe oder deren Gemische, als Weichmacher einzusetzen. Derartige Kohlenwasserstoffe können aromatisch oder aliphatisch sein. Bei der Auswahl ist insbesondere darauf zu achten, dass diese Kohlenwasserstoffe eine geringe Flüchtigkeit und eine hinreichende Verträglichkeit mit den übrigen Bestandteilen der Siliconzusammensetzung aufweisen.

Der Anteil des Weichmachers beträgt vorzugsweise 2 bis 15 Gew.-%, insbesondere 5 bis 10 Gew.-%, der gesamten einkomponentigen, feuchtigkeitshärtenden Siliconzusammensetzung.

Vorzugsweise weist die Zusammensetzung weiterhin mindestens einen Füllstoff auf. Der Füllstoff beeinflusst sowohl die rheologischen Eigenschaften der nicht ausgehärteten Zusammensetzung als auch die mechanischen Eigenschaften und die Oberflächenbeschaffenheit der ausgehärteten Zusammensetzung. Es können sowohl aktive, als auch passive Füllstoffe in der zweikomponentigen Siliconzusammensetzung eingesetzt werden. Bei aktiven Füllstoffen treten chemische oder physikalische Wechselwirkungen mit dem Polymer auf, bei passiven Füllstoffen treten diese nicht oder nur in untergeordnetem Umfang auf.

Geeignete Füllstoffe sind anorganische oder organische Füllstoffe, zum Beispiel natürliche, gemahlene oder gefällte Calciumcarbonate, welche gegebenenfalls mit Fettsäuren, insbesondere Stearinsäure, beschichtet sind, calcinierte Kaoline, Aluminiumoxide, Aluminiumhydroxide, Kieselsäuren, insbesondere hochdisperse Kieselsäuren aus Pyrolyseprozessen, Russ, insbesondere industriell hergestellter Russ ("carbon black"), Aluminiumsilicate, Magnesium-Aluminiumsilicate, Zirkoniumsilicate, Quarzmehl, Christobalitmehl, Diatomeenerde, Glimmer, Eisenoxide, Titanoxide, Zirconiumoxide, Gips, Annalin, Bariumsulfat (BaSO₄, auch Baryt oder Schwerspat genannt), Borcarbid, Bornitrid, Graphit, Kohlefasern, Zeolithe, Glasfasern oder Glashohlkugeln, deren Oberfläche gegebenenfalls mit einem Hydrophobierungsmittel behandelt ist. Bevorzugte Füllstoffe sind Calciumcarbonate, calcinierte Kaoline, Russ, hochdisperse Kieselsäuren sowie flammhemmende Füllstoffe, wie Hydroxide oder Hydrate, insbesondere Hydroxide oder Hydrate von Aluminium, bevorzugt Aluminiumhydroxid.

In einer bevorzugten Ausführungsform enthält die Siliconzusammensetzung hochdisperse Kieselsäuren aus Pyrolyseprozessen oder Calciumcarbonate als Füllstoff.

Es ist durchaus möglich und kann sogar von Vorteil sein, eine Mischung verschiedener Füllstoffe einzusetzen.

Eine geeignete Menge Füllstoff liegt beispielsweise im Bereich von 10 bis 70 Gew.-%, insbesondere 15 bis 60 Gew.-%, bevorzugt 30 bis 60 Gew.-%, bezogen auf die gesamte einkomponentige, feuchtigkeitshärtende Siliconzusammensetzung.

Besonders geeignet als Haftvermittler sind Organoalkoxysilane, deren organische Reste vorzugsweise mit funktionellen Gruppen substituiert sind. Die funktionellen Gruppen sind beispielsweise Amino-, Glycidoxy- oder Mercaptogruppen. Bevorzugt sind Aminogruppen. Bei den Alkoxygruppen derartiger Organoalkoxysilane handelt es sich meist um Methoxy- oder Ethoxygruppen. Besonders bevorzugt sind Aminopropyltrimethoxysilan, 3-Aminopropyltriethoxysilan, 3-(2-Aminoethyl)-aminopropyltriethoxysilan und 3-Mercaptopropyltriethoxysilan. Es ist auch möglich, ein Gemisch von Haftvermittlern einzusetzen. Weiterhin eignen sich als Haftvermittler beispielsweise auch aminofunktionelle Alkylsilsesquioxane wie aminofunktionelles Methylsilsesquioxan oder aminofunktionelles Propylsilsesquioxan, alkoxylierte Alkylenamine, insbesondere ethoxylierte und/oder propoxylierte Alkylendiamine, sowie weitere, insbesondere substituierte, Oligomere, Polymere oder Copolymere auf Basis von Polyalkylenglykolen.

Es ist dem Fachmann klar, dass bei der Verwendung von Silanen als Haftvermittler die Möglichkeit besteht, dass diese je nach Bedingungen, beispielsweise Feuchtigkeit, teilweise oder vollständig hydrolysiert vorliegen können. Weiterhin ist dem Fachmann bekannt, dass es bei der Anwesenheit solcher teilweise oder vollständig hydrolysierten Silane, durch Kondensationsreaktionen, zur Bildung von oligomeren Siloxanen, insbesondere zu Dimeren und/oder Trimeren kommen kann.

Der Anteil des Haftvermittlers beträgt vorzugsweise 0.1 bis 15 Gew.-%, insbesondere 1 bis 10 Gew.-%, bevorzugt 1 bis 5 Gew.-%, der gesamten einkomponentigen, feuchtigkeitshärtenden Siliconzusammensetzung.

Dem Fachmann ist bestens bekannt, dass Bestandteile wie sie insbesondere vorhergehend aufgeführt sind nicht nur eine einzige, ihnen zugeschriebene Funktion oder Wirkung aufweisen können. Vielmehr ist es üblich, dass ein einzelner Bestandteil oder eine einzelne Verbindungen mehrere Funktionen aufweist. So können beispielsweise manche Haftvermittler auch als Vernetzer, Trocknungsmittel oder Kettenabbrecher wirken oder Füllstoffe gleichzeitig auch Rheologiemodifikatoren sein oder dergleichen.

Besonders bevorzugte einkomponentige, feuchtigkeitshärtende Siliconzusammensetzungen, wie sie in der Komponente **A** der erfindungsgemässen zweikomponentigen Siliconzusammensetzung enthalten sind, sind beispielsweise beschrieben in der Patentanmeldung WO 2008/025812 A1, deren gesamte Offenbarung hiermit durch Bezugnahme eingeschlossen ist.

Weiterhin sind geeignete einkomponentige, feuchtigkeitshärtende Siliconzusammensetzungen (RTV-1 Silicone), wie sie als Komponente **A** der zweikomponentigen Siliconzusammensetzung eingesetzt werden, beispielsweise unter den Handelsnamen Sikasil® WS-605, WS-305, SG-20 kommerziell erhältlich von Sika Schweiz AG.

Die Komponente **B** der zweikomponentigen Siliconzusammensetzung umfasst Wasser sowie mindestens ein Trägermaterial, welches ausgewählt ist aus der Gruppe bestehend aus einem Polydiorganosiloxan, einem Weichmacher, einem Verdickungsmittel und einem Füllstoff.

Das Polydiorganosiloxan ist dabei insbesondere ein Polydiorganosiloxan **P1** der Formel (I).

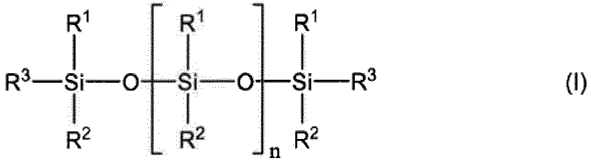

Dabei stehen die Reste R¹ und R² unabhängig voneinander für lineare oder verzweigte, einwertige Kohlenwasserstoffreste mit 1 bis 12 C-Atomen, welche gegebenenfalls ein oder mehrere Heteroatome, und gegebenenfalls eine oder mehrere C-C-Mehrfachbindungen und/oder gegebenenfalls cycloaliphatische und/oder aromatische Anteile aufweisen.

Die Reste R³ stehen unabhängig voneinander für Hydroxylgruppen oder für lineare oder verzweigte, einwertige Kohlenwasserstoffreste mit 1 bis 12 C-Atomen, welche gegebenenfalls ein oder mehrere Heteroatome, und gegebenenfalls eine oder mehrere C-C-Mehrfachbindungen und/oder gegebenenfalls cycloaliphatische und/oder aromatische Anteile aufweisen. Insbesondere stehen die Reste R³ für Reste, welche ausgewählt sind aus der Gruppe bestehend aus Hydroxylgruppen, Methylgruppen, Ethylgruppen, Vinylgruppen und Phenylgruppen. Meist bevorzugt stehen die Reste R³ für Hydroxylgruppen, das heisst, dass es sich beim Polydiorganosiloxan **P1** um ein reaktives Trägermaterial handelt.

Weiterhin ist der Index n so gewählt ist, dass das Polydiorganosiloxan **P1** bei einer Temperatur von 23 °C eine Viskosität von 1 bis 500'000 mPa·s, insbesondere, 100 bis 200'000 mPa·s, aufweist.

Als Weichmacher für die Komponente **B** eignen sich insbesondere Weichmacher, wie sie auch in der einkomponentigen, feuchtigkeitshärtenden Siliconzusammensetzung aus Komponente **A** enthalten sind und bereits vorhergehend beschrieben worden sind. Weiterhin eignen sich insbesondere Ester organischer Carbonsäuren oder deren Anhydride, wie Phthalate, beispielsweise Dioctylphthalat, Diisononylphthalat oder Diisodecylphthalat, Adipate, beispielsweise Dioctyladipat, Azelate und Sebacate, Polyole, beispielsweise Polyoxyalkylenpolyole oder Polyesterpolyole, organische Phosphor- und Sulfonsäureester, Polybutene oder blockierte Polyurethanpolymere.

Als Verdickungsmittel in der Komponente **B** eignen sich insbesondere wasserlösliche bzw. wasserquellbare Polymere oder anorganische Verdickungsmittel. Beispiele für organische natürliche Verdickungsmittel sind Agar-agar, Carrageen, Tragant, Gummi arabicum, Alginate, Pektine, Polyosen, Guar-Mehl, Stärke, Dextrine, Gelatine oder Casein. Beispiele für organische voll- oder teilsynthetische Verdickungsmittel sind Carboxymethylcellulose, Celluloseether, Hydroxyethylcellulose, Hydroxypropylcellulose, Poly(meth)-acrylsäurederivate, Poly(meth)acrylate, Polyvinylether, Polyvinylalkohol, Polyamide oder Polyimine. Beispiele für anorganische Verdickungsmittel sind Polykieselsäuren, hochdisperse, pyrogene, hydrophile Kieselsäuren und Tonmineralien wie Montmorillonit.

Als Füllstoffe der Komponente **B** eignen sich insbesondere jene, welche auch in der einkomponentigen, feuchtigkeitshärtenden Siliconzusammensetzung aus Komponente **A** enthalten sind und bereits vorhergehend beschrieben worden sind. Bevorzugt ist der in der Komponente **B** enthaltene Füllstoff, ein Füllstoff, der verdickend wirkt und Wasser bindet.

Meist bevorzugt ist der Füllstoff in der Komponente **B** ausgewählt aus der Gruppe bestehend aus Kieselsäuren, Zeolithe und Calciumcarbonaten.

Vorzugsweise wird als Trägermaterial in der Komponente **B** eine Mischung von mindestens zwei der vorhergehend beschriebenen Trägermaterialien eingesetzt. Bevorzugt ist das Trägermaterial eine Mischung eines Polydiorganosiloxans **P1** der Formel (I) mit mindestens einem Verdickungsmittel und/oder mit mindestens einem Füllstoff.

Gegebenenfalls enthält die Komponente **B** zusätzlich weitere Hilfsstoffe wie beispielsweise Thixotropierungsmittel, Dispergiermittel, Emulgatoren, Fungizide oder Stabilisatoren.

Der Wassergehalt in der Komponente **B** kann je nach Ausführungsform der zweikomponentigen Siliconzusammensetzung variiert werden. Dem Fachmann ist dabei selbstverständlich klar, dass die Menge der eingesetzten Komponente **B,** abhängig von der darin enthaltenen Wassermenge ist. Enthält also beispielsweise die Komponente **B** einen hohen Wasseranteil von > 50 Gew.-% so wird die Komponente **B** üblicherweise in einer Menge von 1 bis 10 Gew.-% bezogen auf die Menge der Komponente **A** eingesetzt. Enthält die Komponente **B** hingegen beispielsweise nur etwa 5 Gew.-% Wasser, kann die Komponente **B** auch in einer Menge von etwa 50 Gew.-% bezogen auf die Menge der Komponente **A** eingesetzt werden.

Vorzugsweise liegt der Wasseranteil an der gesamten zweikomponentigen Siliconzusammensetzung in dem Bereich, dass mit dem vorhandenen Wasser 50 bis 100 % aller reaktiven Gruppen in der Zusammensetzung umgesetzt werden können.

Insbesondere wird die erfindungsgemässe zweikomponentige Siliconzusammensetzung so eingesetzt, dass das Gewichtsverhältnis der Komponente **A** zu Komponente **B** ≥ 1:1, insbesondere von 3:1 bis 70:1, bevorzugt von 10:1 bis 20:1, beträgt.

Die erfindungsgemässe zweikomponentige Siliconzusammensetzung wird typischerweise in separaten Verpackungen oder in einer Verpackung aufbewahrt, welche zwei von einander getrennte Kammern aufweist. Die Komponente **A** ist hierbei in der einen Kammer und die Komponente **B** ist in der anderen Kammer der Verpackung vorhanden. Geeignete Verpackungen sind beispielsweise Doppelkartuschen, wie Zwillings- oder Koaxialkartuschen, oder Mehrkammerschlauchbeutel mit Adapter. Bevorzugt erfolgt das Mischen der beiden Komponenten **A** und **B** mit Hilfe eines Statikmischers, welcher auf die Verpackung mit zwei Kammern aufgesetzt werden kann.

Solche geeigneten Verpackungen sind beispielsweise beschrieben in US 2006/0155045 A1, WO 2007/096355 A1 und in US 2003/0051610 A1, deren gesamte Offenbarung hiermit durch Bezugnahme eingeschlossen wird.

In einer grosstechnischen Anlage werden die beiden Komponenten **A** und **B** typischerweise in Fässern oder Hobbocks voneinander getrennt aufbewahrt und bei der Applikation, beispielsweise mittels Zahnradpumpen, ausgepresst und vermischt. Die Zusammensetzung kann dabei von Hand oder in einem automatisierten Prozess mittels Roboter auf ein Substrat aufgetragen werden.

Die Komponente **A** der vorhergehend beschriebenen zweikomponentigen Siliconzusammensetzung wird unter Ausschluss von Feuchtigkeit hergestellt und aufbewahrt. In dieser Form ist die Komponente **A** lagerstabil, das heisst, sie kann unter Ausschluss von Feuchtigkeit in einer geeigneten Verpackung oder Anordnung, wie sie vorhergehend beschreiben wurde, über einen Zeitraum von mehreren Monaten bis zu einem Jahr und länger aufbewahrt werden, ohne dass sie sich in ihren Anwendungseigenschaften oder in ihren Eigenschaften nach der Aushärtung in einem für ihren Gebrauch relevanten Ausmass verändert. Üblicherweise wird die Lagerstabilität über die Messung der Viskosität oder der Reaktivität über die Zeit ermittelt.

Die Komponente **B** ist auch beim Einsatz eines reaktiven Trägermaterials lagerstabil, da sie vorzugsweise weder Vernetzer noch Katalysatoren enthält.

Bei der Applikation der zweikomponentigen Siliconzusammensetzung werden die Komponenten **A** und **B,** beispielsweise durch Rühren, Kneten Walzen oder dergleichen, insbesondere jedoch über einen Statikmischer, miteinander vermischt. Dabei kommt die einkomponentige, feuchtigkeitshärtende Siliconzusammensetzung, welche in der Komponente **A** enthalten ist, in Kontakt mit dem Wasser aus der Komponente **B,** was zu einer Vernetzung der Zusammensetzung führt.

Beim Kontakt mit Wasser werden die hydrolysierbaren Gruppen der in der einkomponentigen, feuchtigkeitshärtenden Siliconzusammensetzung enthaltenden Bestandteile, welche solche Gruppen aufweisen, hydrolysiert und reagieren anschliessend in Kondensationsreaktionen mit ebenfalls bereits hydrolysierten Gruppen oder mit hydrolysierbaren Gruppen.

Der Kontakt der Siliconzusammensetzung mit Wasser, insbesondere in Form von Luftfeuchtigkeit, ist für die Vernetzung nicht nötig, kann diese aber ebenfalls begünstigen. Insbesondere verläuft die Nachhärtung der Siliconzusammensetzung mittels Luftfeuchtigkeit.

Die Aushärtung der zweikomponentigen Siliconzusammensetzung erfolgt insbesondere bei Raumtemperatur.

Bei der Vernetzung der zweikomponentigen Siliconzusammensetzung entstehen als Reaktionsprodukte der Kondensationsreaktion insbesondere auch Verbindungen der Formel H-R⁵ und H-R⁷, wobei R⁵ und R⁷ bereits vorhergehend beschrieben wurden. Bevorzugt handelt es sich bei diesen Nebenprodukten der Kondensationsreaktionen um Verbindungen, welche weder die Zusammensetzung noch das Substrat, auf dem die Zusammensetzung appliziert wird beeinträchtigen. Meist bevorzugt handelt es sich bei den Reaktionsprodukten der Formeln H-R⁵ und H-R⁷ um Verbindung, welche sich leicht aus der vernetzenden oder der bereits vernetzten Zusammensetzung verflüchtigen.

Wie bereits vorhergehend erwähnt, ist die Komponente **A,** also die einkomponentige, feuchtigkeitshärtende Siliconzusammensetzung, so beschaffen, dass diese für sich alleine mittels Luftfeuchtigkeit vollständig aushärten können. Eine derartig ausgehärtete einkomponentige, feuchtigkeitshärtende Siliconzusammensetzung liefert vergleichbare Endfestigkeitswerte wie die Mischung der Komponenten **A** und **B** nach der Aushärtung. Daher ist die zweikomponentige Siliconzusammensetzung sehr unempfindlich gegenüber Misch- und Dosierungsfehlern zwischen der Komponente **A** und der Komponente **B,** wodurch das Verhältnis **A:B** in weiten Bereichen variiert werden kann, ohne dass die Endfestigkeit der ausgehärteten Zusammensetzung darunter leidet. Dies ist gegenüber herkömmlichen zweikomponentigen Siliconzusammensetzungen ein bedeutender Vorteil. Gegenüber einkomponentigen Systemen besteht der Vorteil darin, dass die erfindungsgemässe zweikomponentige Zusammensetzung weitgehend unabhängig von der Luftfeuchtigkeit durchhärtet. Zudem kann die Aushärtungsgeschwindigkeit der zweikomponentigen Zusammensetzung generell erheblich erhöht werden.

In einer bevorzugten Ausführungsform der zweikomponentigen Siliconzusammensetzung, in welcher die Komponente **B** zusätzlich ein Polydiorganosiloxan **P1** umfasst, bei welchem die Reste R³ für Hydroxylgruppen stehen, wird eine schnelle Vernetzung der Siliconzusammensetzung, zusätzlich zu der Reaktion der Komponente **A** mit Wasser, auch über die schnelle Reaktion der Hydroxylgruppen des Polydiorganosiloxans **P1** mit den reaktiven Endgruppen des Polydiorganosiloxans **P2** erreicht, weil für diese Reaktion kein Wasser benötigt wird. Dadurch lassen sich Zusammensetzungen mit sehr kurzen Topfzeiten, beispielsweise im einstelligen Minutenbereich, herstellen. Zudem lässt sich auch die Katalysatormenge niedrig halten, was insbesondere aus ökologischer und toxikologischer Sicht vorteilhaft ist.

Weiterhin betrifft die Erfindung eine gehärtete Siliconzusammensetzung wie sie erhältlich ist aus einer vorhergehend beschriebenen zweikomponentigen Siliconzusammensetzung durch Mischen der Komponente **A** mit der Komponente **B.**

Weiterhin betrifft die Erfindung die Verwendung von zweikomponentigen Siliconzusammensetzungen, wie sie vorhergehend beschrieben sind, als Klebstoff, Dichtstoff, als Beschichtung oder als Gussmasse.

Die erfindungsgemässe zweikomponentige Siliconzusammensetzung wird insbesondere verwendet in einem Verfahren des Verklebens zweier Substrate **S1** und **S2** umfassend die Schritte
a) Applikation einer zweikomponentigen Siliconzusammensetzung gemäss vorhergehender Beschreibung auf ein Substrat **S1** und/oder ein Substrat **S2;**
b) Kontaktieren der Substrate **S1** und **S2** über die applizierte Zusammensetzung innerhalb der Offenzeit der Zusammensetzung;
c) Aushärtung der Zusammensetzung durch Reaktion der Komponenten **A** und **B;**
wobei die Substrate **S1** und **S2** gleich oder verschieden voneinander sind.

Bevorzugt wird die erfindungsgemässe Zusammensetzung auch verwendet in einem Verfahren der Abdichtung oder des Beschichtens umfassend die Schritte
a') Applikation einer zweikomponentigen Siliconzusammensetzung gemäss vorhergehender Beschreibung auf ein Substrat **S1** und/oder zwischen zwei Substrate **S1** und **S2;**
b') Aushärtung der Zusammensetzung durch Reaktion der Komponenten **A** und **B;**
wobei die Substrate **S1** und **S2** gleich oder verschieden voneinander sind.

Es ist dem Fachmann selbstverständlich klar, dass unmittelbar vor oder während der Applikation der zweikomponentigen Zusammensetzung die beiden Komponenten **A** und **B** miteinander vermischt werden müssen.

In einer Ausführungsform weist die erfindungsgemässe zweikomponentige Siliconzusammensetzung beispielsweise bei Raumtemperatur eine pastöse Konsistenz mit strukturviskosen Eigenschaften auf. Eine solche Zusammensetzung wird mit einer geeigneten Vorrichtung auf das Substrat aufgetragen, bevorzugt in Form einer Raupe, wobei diese vorteilhaft eine im Wesentlichen runde oder dreieckige Querschnittsfläche aufweist. Eine derartige erfindungsgemässe Zusammensetzung mit guten Applikationseigenschaften weist vorzugsweise eine hohe Standfestigkeit und einen kurzen Fadenzug auf. Das heisst, sie bleibt nach der Applikation in der applizierten Form stehen, fliesst also nicht auseinander, und zieht nach dem Absetzen des Applikationsgerätes keinen oder nur einen sehr kurzen Faden, so dass das Substrat nicht verschmutzt wird.

In einer anderen Ausführungsform weist die Zusammensetzung bei Raumtemperatur eine flüssige Konsistenz mit guten Verlaufeigenschaften auf. Dadurch lässt sie sich einfach als selbstverlaufende Beschichtung auf überwiegend ebene Flächen oder als Gussmasse applizieren.

Als Substrate **S1** und/oder **S2** eignen sich insbesondere Substrate, welche ausgewählt sind aus der Gruppe bestehend aus Beton, Mörtel, Backstein, Ziegel, Keramik, Gips, Naturstein wie Granit oder Marmor, Glas, Glaskeramik, Metall oder Metalllegierung wie Aluminium, Stahl, Buntmetall, verzinktes Metall, Holz, Kunststoff wie PVC, Polycarbonat, Polymethyl-(meth)acrylat, Polyester, Epoxidharz, Farbe und Lack.

Die zweikomponentige Siliconzusammensetzung findet insbesondere in der industriellen Fertigung, insbesondere von Fahrzeugen und Gebrauchsgegenständen des täglichen Gebrauchs, sowie im Bauwesen, insbesondere im Tief- und Hochbau, Anwendung. Bevorzugt wird die zweikomponentige Siliconzusammensetzung im Fensterbau verwendet.

Weiterhin betrifft die Erfindung einen Artikel, welcher eine zumindest teilweise gehärtete Siliconzusammensetzung gemäss vorhergehender Beschreibung aufweist, wobei es sich bei diesem Artikel insbesondere um ein Bauwerk, ein Industriegut oder ein Transportmittel, insbesondere ein Gebäude, oder ein Teil davon handelt.

Eine beispielhafte Aufzählung derartiger Artikel sind Häuser, Glasfassaden, Fenster, Bäder, Badezimmer, Küchen, Dächer, Brücken, Tunnels, Strassen, Automobile, Lastkraftwagen, Schienenfahrzeuge, Busse, Schiffe, Spiegel, Scheiben, Wannen, Weisswaren, Haushaltsapparate, Geschirrspüler, Waschmaschinen, Backofen, Schienwerfer, Nebelleuchter oder Solarpanels wie Photovoltaik- oder Solarthermie-Module.

### Beispiele

Im Folgenden sind Referenzbeispiele die nicht Teil der Erfindung sind aufgeführt, welche die beschriebene Erfindung näher erläutern sollen.

### Herstellung der Siliconzusammensetzunqen

Es wurden die folgenden Zusammensetzungen hergestellt:
Als Komponenten **A** und **B** wurden die in den Tabellen 1 und 2 aufgeführten Bestandteile in den angegebenen Gewichtsanteilen in einem Planetenmischer bei Raumtemperatur unter Inertatmosphäre miteinander vermischt und eingerührt, bis eine makroskopisch homogene Paste erhalten wurde.

Die hergestellten Komponenten **A** und **B** wurden in separate Kartuschen eingefüllt und die Kartuschen wurden verschlossen. In einem ersten Versuch wurde die Komponente **A** alleine appliziert (Referenzbeispiel "***Ref***"). In einem zweiten Versuch wurde die Komponente **A** mit 5 Gew.-% der Komponente **B** mittels Statikmischer vermischt. In einem dritten Versuch wurde die Komponente **A** mit 10 Gew.-% der Komponente **B** mittels Statikmischer vermischt.

### Beschreibung der Prüfmethoden

Die **Topfzeit** der Zusammensetzung wurde dadurch gemessen, dass die zuvor in verschlossenen Kartuschen während 24 Stunden bei 23 °C konditionierten Komponenten **A** und **B** (beim Referenzbeispiel nur Komponente **A**) in den in den Tabellen 1 und 2 angegebenen Gewichtsanteilen (5 Gew.-% **B** in **A** bzw. 10 Gew.-% **B** in **A**) über einen Statikmischer miteinander vermischt wurden. Anschliessend wurde mit einem Holzspatel mindestens einmal pro Minute in der Zusammensetzung gerührt und die Zeit bestimmt, nach welcher die Zusammensetzung beim schnellen Herausziehen des Holzspatels keine langen Fäden (pastöses Verhalten) mehr zieht, sondern bereits nach kurzer Fadenbildung bricht (gummiartiges Verhalten).

Die **Zugfestigkeit** und die **Bruchdehnung** wurden gemäss DIN 53504 an Filmen mit einer Schichtdicke von 2 mm, welche 7 Tage bei 23 °C, 50 % relativer Luftfeuchtigkeit gelagert wurden, mit einer Messgeschwindigkeit von 200 mm/min auf einer Zugmaschine Zwick/Roell Z005 gemessen. Die angegebenen Werte sind die Mittelwerte von fünf Messungen.

Die **Shore A-Härte** wurde bestimmt nach DIN 53505. Zur Bestimmung der Durchhärtung mittels Härteaufbau wurde die Shore A-Härte nach Lagerung der applizierten Siliconzusammensetzungen während einem Tag ("1d"), nach 3 Tagen ("3d") und nach 7 Tagen ("7d") bei einer Temperatur von jeweils 23 °C und einer relativen Luftfeuchtigkeit von 50 % gemessen.

### Herstellung der Prüfkörper

Für die Analyse der Durchhärtung mittels Härteaufbau wurden Prüfkörper einer Dicke von 6 mm durch Einfüllen der zweikomponentigen Siliconzusammensetzung in ein Teflonring mit der entsprechenden Höhe hergestellt.

**Tabelle 1 Zweikomponentige Siliconzusammensetzungen und Resultate der Mischung von A:B in unterschiedlichen Konzentrationen**

| | | | | ***1 (Ref.)*** | **2 *(Ref.)*** | ***3 (Ref.)*** |
|---|---|---|---|---|---|---|
| **A** | OH-term. PDMS ^{a}(Mw = 150'000 g/mol) | | | 120 | 120 | 120 |
| | Vinyl-tris(MEKO)silan^{b} | | | 3.5 | 3.5 | 3.5 |
| | Vinyltrimethoxysilan | | | 16 | 16 | 16 |
| | Haftvermittler | | | 2.3 | 2.3 | 2.3 |
| | Kreide | | | 207.5 | 207.5 | 207.5 |
| | Katalysator ^{c} | | | 0.01 | 0.03 | 0.06 |
| B | OH-term. PDMS ^{a}(Mw = 150'000 g/mol) | | | 30 | 30 | 30 |
| | Kieselsäure | | | 9 | 9 | 9 |
| | Wasser | | | 35 | 35 | 35 |
| Topfzeit [min] | | 0 Gew.-% | **B** in **A (*Ref*)** | > 24h | > 24h | > 24h |
| | | 5 Gew.-% | **B** in **A** | 36 | 20 | 14 |
| | | 10 Gew.-% | **B** in **A** | 51 | 25 | 21 |
| Bruchdehnung [%] | | 0 Gew.-% | **B** in **A (*Ref*)** | 294 | 246 | 261 |
| | | 5 Gew.-% | **B** in **A** | 347 | 269 | 419 |
| | | 10 Gew.-% | **B** in **A** | 442 | 485 | 637 |
| Zugfestigkeit [MPa] | | 0 Gew.-% | **B** in **A (*Ref*)** | 0.56 | 0.63 | 0.62 |
| | | 5 Gew.-% | **B** in **A** | 0.68 | 0.66 | 0.75 |
| | | 10 Gew.-% | **B** in **A** | 0.68 | 0.75 | 0.91 |
| Shore A-Härte 7d^{d} | | 0 Gew.-% | **B** in **A (*Ref*)** | 35 | 35 | 38 |
| | | 5 Gew.-% | **B** in **A** | 25 | 27 | 34 |
| | | 10 Gew.-% | **B** in **A** | 24 | 29 | 35 |

| | | | | | | |
|---|---|---|---|---|---|---|
| ^{a}OH-term. PDMS: OH-Gruppen terminiertes Polydimethylsiloxan; ^{b}Vinyl-tris(methylethylketoximo)silan; ^{c}zinnorganische Verbindung; ^{d}Die Shore A wurde hierbei an drei aufeinanderliegenden Filmen mit einer Schichtdicke von je 2 mm gemessen. | | | | | | |

**Tabelle 2 Zweikomponentige Siliconzusammensetzungen und Resultate der Messung des Härteaufbaus einer Mischung von A:B in unterschiedlichen Konzentrationen**

| **Analyse der Durchhärtung mittels Härteaufbau von 6 mm dicken Prüfkörpern** | | | | **1 *(Ref.)*** | ***2 (Ref.)*** | ***3 (Ref.)*** |
|---|---|---|---|---|---|---|
| **A** | OH-term. PDMS ^{a}(Mw = 150'000 g/mol) | | | 120 | 120 | 120 |
| | Vinyl-tris(MEKO)silan^{b} | | | 3.5 | 3.5 | 3.5 |
| | Vinyltrimethoxysilan | | | 16 | 16 | 16 |
| | Haftvermittler | | | 2.3 | 2.3 | 2.3 |
| | Kreide | | | 207.5 | 207.5 | 207.5 |
| | Katalysator ^{c} | | | 0.01 | 0.03 | 0.06 |
| **B** | OH-term. PDMS ^{a} (Mw = 150'000 g/mol) | | | 30 | 30 | 30 |
| | Kieselsäure | | | 9 | 9 | 9 |
| | Wasser | | | 35 | 35 | 35 |
| Shore A-Härte nach 1d^{e} | | 0 Gew.-% | **B** in **A (*Ref*)** | 0 | 0 | 0 |
| | | 5 Gew.-% | **B** in **A** | 5 | 6 | 8 |
| | | 10 Gew.-% | **B** in **A** | 6 | 12 | 12 |
| Shore A-Härte nach 3d^{e} | | 0 Gew.-% | **B** in **A (*Ref*)** | 10 | 12 | 14 |
| | | 5 Gew.-% | **B** in **A** | 11 | 14 | 15 |
| | | 10 Gew.-% | **B** in **A** | 14 | 20 | 24 |
| Shore A-Härte nach 7d ^{e} | | 0 Gew.-% | **B** in **A (*Ref*)** | 33 | 35 | 38 |
| | | 5 Gew.-% | **B** in **A** | 23 | 23 | 25 |
| | | 10 Gew.-% | **B** in **A** | 24 | 30 | 33 |

| | | | | | | |
|---|---|---|---|---|---|---|
| ^{a} OH-term. PDMS: OH-Gruppen terminiertes Polydimethylsiloxan; ^{b} Vinyl-tris(methylethylketoximo)silan; ^{c} zinnorganische Verbindung; ^{e} Die Shore A wurde hierbei an einem Prüfkörper mit einer Schichtdicke von 6 mm gemessen. | | | | | | |

## Patentansprüche

1. Zweikomponentige Siliconzusammensetzung bestehend aus einer Komponente **A** umfassend
i) eine einkomponentige, feuchtigkeitshärtende Siliconzusammensetzung, wobei
die einkomponentige, feuchtigkeitshärtende Siliconzusammensetzung mindestens ein Polydiorganosiloxan **P2** der Formel (II) umfasst, 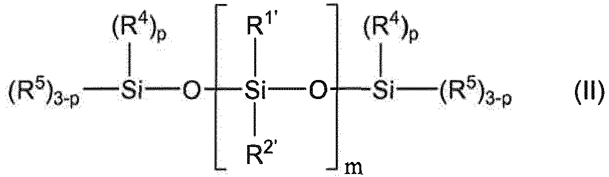 wobei
die Reste R^{1'}, R^{2'} und R⁴ unabhängig voneinander für lineare oder verzweigte, einwertige Kohlenwasserstoffreste mit 1 bis 12 C-Atomen stehen, welche gegebenenfalls ein oder mehrere Heteroatome, und gegebenenfalls eine oder mehrere C-C-Mehrfachbindungen und/oder gegebenenfalls cycloaliphatische und/oder aromatische Anteile aufweisen;
die Reste R⁵ unabhängig voneinander für Ketoximgruppen mit jeweils 1 bis 13 C-Atomen stehen;
der Index p für einen Wert von 0 steht;
der Index m so gewählt ist, dass das Polydiorganosiloxan **P2** bei einer Temperatur von 23 °C eine Viskosität von 10 bis 500'000 mPa·s aufweist; und
die einkomponentige, feuchtigkeitshärtende Siliconzusammensetzung mindestens einen Vernetzer für Polydiorganosiloxane enthält;
und einer Komponente **B** umfassend
i') Wasser; sowie
ii') mindestens ein Trägermaterial, ausgewählt aus der Gruppe bestehend aus einem Polydiorganosiloxan, einem Weichmacher, einem Verdickungsmittel und einem Füllstoff;
**dadurch gekennzeichnet, dass** der Wasseranteil an der gesamten zweikomponentigen Siliconzusammensetzung in dem Bereich liegt, dass mit dem vorhandenen Wasser 50 bis 100 % aller reaktiven Gruppen in der Zusammensetzung umgesetzt werden können, und der Vernetzer für Polydiorganosiloxane ein Silan der Formel (III) ist 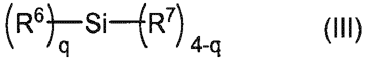 wobei
der Rest R⁶ unabhängig voneinander für einen linearen oder verzweigten, einwertigen Kohlenwasserstoffrest mit 1 bis 12 C-Atomen steht, welcher gegebenenfalls ein oder mehrere Heteroatome, und gegebenenfalls eine oder mehrere C-C-Mehrfachbindungen und/oder gegebenenfalls cycloaliphatische und/oder aromatische Anteile aufweist;
der Rest R⁷ unabhängig voneinander für eine Hydroxylgruppe oder für eine Alkoxy-, Acetoxy- oder Ketoximgruppe mit jeweils 1 bis 13 C-Atomen steht, welche gegebenenfalls ein oder mehrere Heteroatome, und gegebenenfalls eine oder mehrere C-C-Mehrfachbindungen und/oder gegebenenfalls cycloaliphatische und/oder aromatische Anteile aufweist; und
der Index q für einen Wert von 0 bis 4 steht, mit der Massgabe, dass falls q für einen Wert von 3 oder 4 steht, mindestens q-2 Reste R⁶ jeweils mindestens eine mit den Hydroxylgruppen des Polydiorganosiloxans **P2** reaktive Gruppe aufweisen.

2. Zweikomponentige Siliconzusammensetzung gemäss Anspruch 1, **dadurch gekennzeichnet, dass** das Polydiorganosiloxan in der Komponente **B** ein Polydiorganosiloxan **P1** der Formel (I) ist 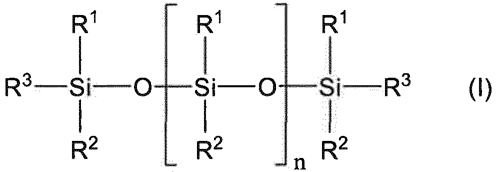 wobei
die Reste R¹ und R² unabhängig voneinander für lineare oder verzweigte, einwertige Kohlenwasserstoffreste mit 1 bis 12 C-Atomen stehen, welche gegebenenfalls ein oder mehrere Heteroatome, und gegebenenfalls eine oder mehrere C-C-Mehrfachbindungen und/oder gegebenenfalls cycloaliphatische und/oder aromatische Anteile aufweisen;
die Reste R³ unabhängig voneinander für Hydroxylgruppen oder für lineare oder verzweigte, einwertige Kohlenwasserstoffreste mit 1 bis 12 C-Atomen stehen, welche gegebenenfalls ein oder mehrere Heteroatome, und gegebenenfalls eine oder mehrere C-C-Mehrfachbindungen und/oder gegebenenfalls cycloaliphatische und/oder aromatische Anteile aufweisen; und
der Index n so gewählt ist, dass das Polydiorganosiloxan **P1** bei einer Temperatur von 23 °C eine Viskosität von 1 bis 500'000 mPa·s aufweist.

3. Zweikomponentige Siliconzusammensetzung gemäss Anspruch 2, **dadurch gekennzeichnet, dass** das Trägermaterial in der Komponente **B** eine Mischung eines Polydiorganosiloxans **P1** der Formel (I) mit mindestens einem Verdickungsmittel und/oder mit mindestens einem Füllstoff ist.

4. Zweikomponentige Siliconzusammensetzung gemäss einem der Ansprüche 2 oder 3, **dadurch gekennzeichnet, dass** die Reste R³ für Reste stehen, welche ausgewählt sind aus der Gruppe bestehend aus Hydroxylgruppen, Methylgruppen, Ethylgruppen, Vinylgruppen und Phenylgruppen.

5. Zweikomponentige Siliconzusammensetzung gemäss Anspruch 4, **dadurch gekennzeichnet, dass** die Reste R³ für Hydroxylgruppen stehen.

6. Zweikomponentige Siliconzusammensetzung gemäss einem der vorhergehenden Ansprüche, **dadurch gekennzeichnet, dass** der in der Komponente **B** enthaltene Füllstoff verdickend wirkt und Wasser bindet.

7. Zweikomponentige Siliconzusammensetzung gemäss Anspruch 6, **dadurch gekennzeichnet, dass** der in der Komponente **B** enthaltene Füllstoff ausgewählt ist aus der Gruppe bestehend aus Kieselsäuren, Zeolithen und Calciumcarbonaten.

8. Zweikomponentige Siliconzusammensetzung gemäss Anspruch 1, **dadurch gekennzeichnet, dass** der Index q für einen Wert von 0 oder 1 steht.

9. Zweikomponentige Siliconzusammensetzung gemäss einem der Ansprüche 1 oder 8, **dadurch gekennzeichnet, dass** der Anteil des Vernetzers für Polydiorganosiloxane 0.1 bis 15 Gew.-%, insbesondere 1 bis 10 Gew.-%, bevorzugt 2 bis 6 Gew.-%, der gesamten einkomponentigen, feuchtigkeitshärtenden Siliconzusammensetzung beträgt.

10. Zweikomponentige Siliconzusammensetzung gemäss einem der vorhergehenden Ansprüche, **dadurch gekennzeichnet, dass** die einkomponentige, feuchtigkeitshärtende Siliconzusammensetzung mindestens einen Katalysator **K** für die Vernetzung von Polydiorganosiloxanen enthält.

11. Verwendung einer zweikomponentigen Siliconzusammensetzung gemäss einem der Ansprüche 1 bis 10 als Klebstoff, Dichtstoff, Beschichtung oder als Gussmasse.

## Claims

1. Two-component silicone composition consisting of a component **A** comprising
(i) a one-component, moisture-curable silicone composition, wherein
the one-component, moisture-curable silicone composition comprises at least one polydiorganosiloxane **P2** of formula (II), 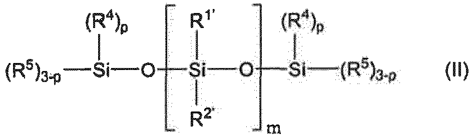 wherein
the radicals R^{1'}, R^{2'} and R⁴ independently of one another represent linear or branched, monovalent hydrocarbon radicals having 1 to 12 carbon atoms which comprise optionally one or more heteroatoms and optionally one or more carbon-carbon multiple bonds and/or optionally cycloaliphatic and/or aromatic proportions;
the radicals R⁵ independently of one another represent ketoxime groups having in each case 1 to 13 carbon atoms;
the index p represents a value of 0;
the index m is chosen such that at a temperature of 23°C the polydiorganosiloxane **P2** has a viscosity of 10 to 500,000 mPa·s; and
the one-component, moisture-curable silicone composition contains at least one crosslinker for polydiorganosiloxanes;
and a component **B** comprising
i') water; and
ii') at least one carrier material selected from the group consisting of a polydiorganosiloxane, a plasticizer, a thickener and a filler;
**characterized in that** the water content in the overall two-component silicone composition is in the range such that the water present is sufficient to convert 50% to 100% of all reactive groups in the composition and the crosslinker for polydiorganosiloxanes is a silane of formula (III) 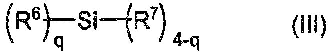 wherein
the radical R⁶ independently at each occurrence represents a linear or branched, monovalent hydrocarbon radical having 1 to 12 carbon atoms which comprises optionally one or more heteroatoms and optionally one or more carbon-carbon multiple bonds and/or optionally cycloaliphatic and/or aromatic proportions;
the radical R⁷ independently at each occurrence represents a hydroxyl group or an alkoxy, acetoxy or ketoxime group having in each case 1 to 13 carbon atoms which comprise optionally one or more heteroatoms and optionally one or more carbon-carbon multiple bonds and/or optionally cycloaliphatic and/or aromatic proportions;
and
the index q represents a value from 0 to 4 with the proviso that when q represents a value of 3 or 4 at least q-2 radicals R⁶ in each case comprise at least one group reactive with the hydroxyl groups of the polydiorganosiloxane **P2**.

2. Two-component silicone composition according to Claim 1, **characterized in that** the polydiorganosiloxane in the component B is a polydiorganosiloxane **P1** of formula (I) 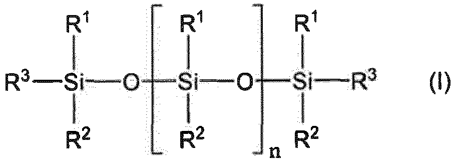 wherein
the radicals R¹ and R² independently of one another represent linear or branched, monovalent hydrocarbon radicals having 1 to 12 carbon atoms which comprise optionally one or more heteroatoms and optionally one or more carbon-carbon multiple bonds and/or optionally cycloaliphatic and/or aromatic proportions;
the radicals R³ independently of one another represent hydroxyl groups or linear or branched, monovalent hydrocarbon radicals having 1 to 12 carbon atoms which comprise optionally one or more heteroatoms and optionally one or more carbon-carbon multiple bonds and/or optionally cycloaliphatic and/or aromatic proportions; and
the index n is chosen such that at a temperature of 23°C the polydiorganosiloxane **P1** has a viscosity of 1 to 500,000 mPa·s.

3. Two-component silicone composition according to Claim 2, **characterized in that** the carrier material in the component **B** is a mixture of a polydiorganosiloxane **P1** of formula (I) with at least one thickener and/or with at least one filler.

4. Two-component silicone composition according to either of Claims 2 or 3, **characterized in that** the radicals R³ represent radicals selected from the group consisting of hydroxyl groups, methyl groups, ethyl groups, vinyl groups and phenyl groups.

5. Two-component silicone composition according to Claim 4, **characterized in that** the radicals R³ represent hydroxyl groups.

6. Two-component silicone composition according to any of the preceding claims, **characterized in that** the filler present in the component **B** brings about a thickening effect and binds water.

7. Two-component silicone composition according to Claim 6, **characterized in that** the filler present in the component **B** is selected from the group consisting of silicas, zeolites and calcium carbonates.

8. Two-component silicone composition according to Claim 1, **characterized in that** the index q represents a value of 0 or 1.

9. Two-component silicone composition according to either of Claims 1 and 8, **characterized in that** the proportion of the crosslinker for polydiorganosiloxanes is 0.1% to 15% by weight, in particular 1% to 10% by weight, preferably 2% to 6% by weight, of the overall one-component, moisture-curable silicone composition.

10. Two-component silicone composition according to any of the preceding claims, **characterized in that** the one-component, moisture-curable silicone composition contains at least one catalyst **K** for the crosslinking of polydiorganosiloxanes.

11. Use of a two-component silicone composition according to any of Claims 1 to 10 as an adhesive, sealant, coating or as a potting compound.

## Revendications

1. Composition de silicone bicomposante constituée par un composant **A** comprenant :
i) une composition de silicone monocomposante durcissant à l'humidité,
la composition de silicone monocomposante durcissant à l'humidité comprenant au moins un polydiorganosiloxane **P2** de formule (II) 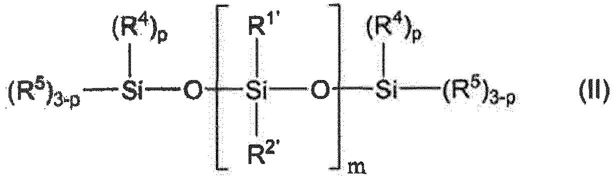 dans laquelle
les radicaux R^{1'}, R^{2'} et R⁴ représentent indépendamment les uns des autres des radicaux hydrocarbonés monovalents linéaires ou ramifiés de 1 à 12 atomes C, qui comprennent éventuellement un ou plusieurs hétéroatomes, et éventuellement une ou plusieurs liaisons multiples C-C et/ou éventuellement des fractions cycloaliphatiques et/ou aromatiques ;
les radicaux R⁵ représentent indépendamment les uns des autres des groupes cétoxime contenant chacun 1 à 13 atomes C ;
l'indice p représente une valeur de 0 ;
l'indice m est choisi de telle sorte que le polydiorganosiloxane **P2** présente à une température de 23 °C une viscosité de 10 à 500 000 mPa·s ; et
la composition monocomposante durcissant à l'humidité contenant au moins un agent de réticulation pour polydiorganosiloxanes ;
et un composant **B,** comprenant :
i') de l'eau ; et
ii') au moins un matériau support, choisi dans le groupe constitué par un polydiorganosiloxane, un plastifiant, un épaississant et une charge ;
**caractérisée en ce que** la proportion d'eau par rapport à la composition de silicone bicomposante totale se situe dans une plage telle que 50 à 100 % de tous les groupes réactifs dans la composition puissent être mis en réaction avec l'eau présente, et l'agent de réticulation pour polydiorganosiloxanes est un silane de formule (III) 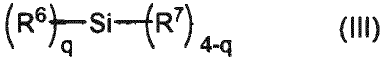 dans laquelle
les radicaux R⁶ représentent indépendamment les uns des autres un radical hydrocarboné monovalent linéaire ou ramifié de 1 à 12 atomes C, qui comprend éventuellement un ou plusieurs hétéroatomes, et éventuellement une ou plusieurs liaisons multiples C-C et/ou éventuellement des fractions cycloaliphatiques et/ou aromatiques ;
les radicaux R⁷ représentent indépendamment les uns des autres un groupe hydroxyle ou un groupe alcoxy, acétoxy ou cétoxime contenant chacun 1 à 13 atomes C, qui comprend éventuellement un ou plusieurs hétéroatomes, et éventuellement une ou plusieurs liaisons multiples C-C et/ou éventuellement des fractions cycloaliphatiques et/ou aromatiques ; et
l'indice q représente une valeur de 0 à 4, à condition que si q représente une valeur de 3 ou 4, au moins q-2 radicaux R⁶ comprennent chacun au moins un groupe réactif avec les groupes hydroxyle du polydiorganosiloxane **P2.**

2. Composition de silicone bicomposante selon la revendication 1, **caractérisée en ce que** le polydiorganosiloxane dans le composant **B** est un polydiorganosiloxane **P1** de formule (I) 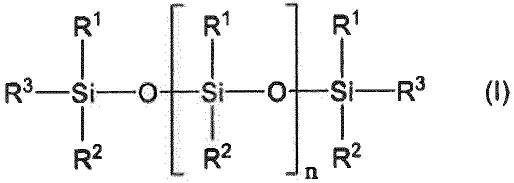 dans laquelle
les radicaux R¹ et R² représentent indépendamment l'un de l'autre des radicaux hydrocarbonés monovalents linaires ou ramifiés de 1 à 12 atomes C, qui comprennent éventuellement un ou plusieurs hétéroatomes, et éventuellement une ou plusieurs liaisons multiples C-C et/ou éventuellement des fractions cycloaliphatiques et/ou aromatiques ;
les radicaux R³ représentent indépendamment les uns des autres des groupes hydroxyle ou des radicaux hydrocarbonés monovalents linéaires ou ramifiés de 1 à 12 atomes C, qui comprennent éventuellement un ou plusieurs hétéroatomes, et éventuellement une ou plusieurs liaisons multiples C-C et/ou éventuellement des fractions cycloaliphatiques et/ou aromatiques ; et l'indice n est choisi de telle sorte que le polydiorganosiloxane **P1** présente à une température de 23 °C une viscosité de 1 à 500 000 mPa·s.

3. Composition de silicone bicomposante selon la revendication 2, **caractérisée en ce que** le matériau support dans le composant **B** est un mélange d'un polydiorganosiloxane **P1** de formule (I) avec au moins un épaississant et/ou avec au moins une charge.

4. Composition de silicone bicomposante selon l'une quelconque des revendications 2 ou 3, **caractérisée en ce que** les radicaux R³ représentent des radicaux qui sont choisis dans le groupe constitué par les groupes hydroxyle, les groupes méthyle, les groupes éthyle, les groupes vinyle et les groupes phényle.

5. Composition de silicone bicomposante selon la revendication 4, **caractérisée en ce que** les radicaux R³ représentent des groupes hydroxyle.

6. Composition de silicone bicomposante selon l'une quelconque des revendications précédentes, **caractérisée en ce que** la charge contenue dans le composant **B** a un effet épaississant et se lie à l'eau.

7. Composition de silicone bicomposante selon la revendication 6, **caractérisée en ce que** la charge contenue dans le composant **B** est choisie dans le groupe constitué par les silices, les zéolithes et les carbonates de calcium.

8. Composition de silicone bicomposante selon la revendication 1, **caractérisée en ce que** l'indice q représente une valeur de 0 ou 1.

9. Composition de silicone bicomposante selon l'une quelconque des revendications 1 ou 8, **caractérisée en ce que** la proportion de l'agent de réticulation pour polydiorganosiloxanes est de 0,1 à 15 % en poids, notamment de 1 à 10 % en poids, de préférence de 2 à 6 % en poids, de la composition de silicone monocomposante durcissant à l'humidité totale.

10. Composition de silicone bicomposante selon l'une quelconque des revendications précédentes, **caractérisée en ce que** la composition de silicone monocomposante durcissant à l'humidité contient au moins un catalyseur **K** pour la réticulation de polydiorganosiloxanes.

11. Utilisation d'une composition de silicone bicomposante selon l'une quelconque des revendications 1 à 10 en tant qu'adhésif, agent d'étanchéité, revêtement ou en tant que matériau de coulage.
